(19) Europäisches Patentamt / European Patent Office / Office européen des brevets

(11) **EP 4 458 880 A1**

(12) **EUROPEAN PATENT APPLICATION**
published in accordance with Art. 153(4) EPC

(43) Date of publication:
**06.11.2024 Bulletin 2024/45**

(21) Application number: **22916027.0**

(22) Date of filing: **26.12.2022**

(51) International Patent Classification (IPC):
**C08G 63/672** (2006.01)     **C08L 101/16** (2006.01)

(52) Cooperative Patent Classification (CPC):
**C08G 63/672; C08L 101/16**

(86) International application number:
**PCT/JP2022/047943**

(87) International publication number:
**WO 2023/127804 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 JP 2021213185**

(71) Applicant: **TOYOBO CO., LTD.**
**Osaka-shi, Osaka 530-0001 (JP)**

(72) Inventors:
• **SAKAI, Miku**
**Otsu-shi, Shiga 520-0292 (JP)**
• **TATSUTA, Masako**
**Otsu-shi, Shiga 520-0292 (JP)**
• **SASAI, Tamayo**
**Otsu-shi, Shiga 520-0292 (JP)**

(74) Representative: **Müller-Boré & Partner**
**Patentanwälte PartG mbB**
**Friedenheimer Brücke 21**
**80639 München (DE)**

(54) **THERMOPLASTIC COPOLYESTER**

(57)     An object of the present invention is to provide a thermoplastic copolyester that not only has toughness but also has excellent enzymatic degradability and excellent heat resistance. The invention specifically provides a thermoplastic copolyester comprising: a hard segment formed of an aromatic polyester structural unit; and a soft segment formed of an aliphatic polyester structural unit, wherein a content of the hard segment in the thermoplastic copolyester is 35 to 63 mass%, the aromatic polyester structural unit contains 70 mass% or more of an aromatic polyester component formed of a dicarboxylic acid component having a furan skeleton, and an aliphatic diol component, the aliphatic polyester structural unit contains 70 mass% or more of an aliphatic hydroxycarboxylic acid component, and the thermoplastic copolyester has a reduced viscosity ranging from 0.5 to 3.5 dl/g.

EP 4 458 880 A1

**Description**

TECHNICAL FIELD

The present invention relates to thermoplastic copolyester having excellent enzymatic degradability and heat resistance.

BACKGROUND ART

In recent years, as environment-friendly or environmentally-sustainable materials, resins that are hydrolyzed in the presence of an enzyme in nature have been developed and put into practical use. Among them, aliphatic polyester is well hydrolyzed but has poor mechanical characteristics and thermal properties as compared with polyester including an aromatic structure. Among polyesters including aromatic structures, polybutylene adipate terephthalate is known to be well decomposed in nature. Polybutylene adipate terephthalate is a polymer having excellent toughness like polyethylene. However, polybutylene adipate terephthalate has a melting point of about 90 to 135°C, and thus has poor heat resistance as compared with generally known aromatic polyester, and a range in which polybutylene adipate terephthalate is used practically is limited (see Patent Literatures 1, 2). Other examples of the polymer having excellent hydrolyzability and a high melting point include polyglycolic acid (melting point is about 230°C) and polylactic acid (melting point is about 170°C). However, these polymers have low breaking strength and are brittle.

Examples of a polymer material having a high melting point and high toughness include block copolyester having both a hard segment and a soft segment. For example, a block copolymer of polybutylene terephthalate and polycaprolactone can be said to be a material that can have a melting point near 200°C since a polybutylene terephthalate component of the hard segment has high crystallinity, and further has excellent toughness since polycaprolactone as the soft segment is flexible aliphatic polyester, and thus has high breaking strength (see Patent Literature 3).

CITATION LIST

PATENT LITERATURE

[PTL 1] Japanese Patent No. 3411289
[PTL 2] Japanese Patent No. 5847938
[PTL 3] Japanese Patent No. 3674934

SUMMARY OF THE INVENTION

PROBLEMS TO BE SOLVED BY THE INVENTION

However, in Patent Literature 3, enzymatic hydrolyzability (enzymatic degradability) is poor due to the presence of polybutylene terephthalate having high crystallinity. Furthermore, if a composition ratio and a chain length of the hard segment are reduced in order to improve enzymatic degradability, a melting point is significantly reduced. That is, conventional polyester cannot have both excellent enzymatic degradability and heat resistance.

The present invention has been made in view of such problems of the conventional art. That is, an object of the present invention is to provide thermoplastic copolyester that includes a hard segment formed of a crystalline aromatic polyester structural unit and a soft segment formed of an aliphatic polyester structural unit, and has excellent toughness, and further has both excellent enzymatic degradability and excellent heat resistance.

SOLUTION TO THE PROBLEMS

In order to attain the aforementioned object, the inventors of the present invention have focused on thermoplastic copolyester including a hard segment and a soft segment, and examined constituent components thereof. As a result, the inventors of the present invention have found that contents of the hard segment and the soft segment as well as use of specific constituent components for the hard segment and the soft segment are important. Furthermore, the inventors of the present invention have found that the chain length of the hard segment is also an important factor. Based on the findings, the present invention has been completed.

That is, the present invention has the following configuration.

[1] A thermoplastic copolyester comprising:

a hard segment formed of an aromatic polyester structural unit; and
a soft segment formed of an aliphatic polyester structural unit, wherein
a content of the hard segment in the thermoplastic copolyester is 35 to 63 mass%,
the aromatic polyester structural unit contains 70 mass% or more of an aromatic polyester component formed of a dicarboxylic acid component having a furan skeleton, and an aliphatic diol component,
the aliphatic polyester structural unit contains 70 mass% or more of an aliphatic hydroxycarboxylic component, and
the thermoplastic copolyester has a reduced viscosity ranging from 0.5 to 3.5 dl/g.

[2] The thermoplastic copolyester according to the above [1], wherein an average chain length of the aromatic polyester structural unit as calculated by using a nuclear magnetic resonance method (NMR method) ranges from 3 to 15.

[3] The thermoplastic copolyester according to the above [1] or [2], wherein the aliphatic diol component constituting the aromatic polyester component is 1,4-butanediol.

[4] The thermoplastic copolyester according to any one of the above [1] to [3], wherein the aliphatic hydroxycarboxylic acid component is derived from any of $\varepsilon$-caprolactone, $\delta$-valerolactone, $\gamma$-butyrolactone, $\beta$-propiolactone, $\beta$-butyrolactone, and pivalolactone.

[5] The thermoplastic copolyester according to any one of the above [1] to [4], wherein, in an enzymatic degradation test in which a polyester-degrading enzyme is used, a weight reduction rate is 70 weight% or more.

[6] The thermoplastic copolyester according to any one of the above [1] to [5], wherein the thermoplastic copolyester has a melting point ranging from 130°C to 167°C.

[7] A molded product comprising the thermoplastic copolyester according to any one of the above [1] to [6].

ADVANTAGEOUS EFFECTS OF THE INVENTION

According to the present invention, the thermoplastic copolyester having excellent enzymatic degradability, heat resistance, and toughness can be obtained. The aromatic polyester structural unit of the hard segment includes a predetermined or more amount of the aromatic polyester component formed of the dicarboxylic acid component having a furan skeleton, and the aliphatic diol component. The aliphatic polyester structural unit of the soft segment includes a predetermined or more amount of the aliphatic hydroxycarboxylic acid component, and a mass ratio between the hard segment and the soft segment is in a predetermined range. Thus, the thermoplastic copolyester having excellent enzymatic degradability and heat resistance is obtained, and, furthermore, the average chain length of the aromatic polyester structural unit has a predetermined value or more, and thus, the thermoplastic copolyester having much more excellent heat resistance can be obtained.

DESCRIPTION OF EMBODIMENTS

The present invention will be described below in detail.

Thermoplastic copolyester used in the present invention is copolyester, i.e., a block copolymer, which includes, as constituent components, a hard segment formed of an aromatic polyester structural unit and a soft segment formed of an aliphatic polyester structural unit. In a case where the hard segment and the soft segment are thus included, toughness can be imparted. The hard segment and the soft segment may be directly bonded through an ester bond, or may be bonded through a chain extender or the like. However, preferably, the hard segment and the soft segment are directly bonded.

In the thermoplastic copolyester, an amount of the hard segment is 35 to 63 mass%, and an amount of the soft segment is 37 to 65 mass%. In a case where the thermoplastic copolyester is merely formed of the hard segment formed of an aromatic polyester structural unit and the soft segment formed of an aliphatic polyester structural unit, the total amount of both the segments is 100 mass%. If an amount of the hard segment is larger than 63 mass%, enzymatic degradability cannot be sufficiently obtained. Meanwhile, if an amount of the soft segment is larger than 65 mass%, a melting point is significantly reduced, and thus, a problem with heat resistance arises. Therefore, in order to achieve both enzymatic degradability and heat resistance, an amount of the hard segment is preferably 40 to 63 mass% and an amount of the soft segment is preferably 37 to 60 mass%, and an amount of the hard segment is more preferably 58 to 63 mass% and an amount of the soft segment is more preferably 37 to 42 mass%.

The aromatic polyester structural unit of the hard segment contains 70 mass% or more of an aromatic polyester component formed of a dicarboxylic acid component having a furan skeleton and an aliphatic diol component. The hard segment is a crystalline polyester segment having a high melting point.

The aliphatic polyester structural unit of the soft segment contains 70 mass% or more of an aliphatic hydroxycarboxylic acid component.

In a case where a proportion between the hard segment and the soft segment is expressed, the proportion needs to be expressed by mass% instead of mol% in consideration of the fact that a unit molecular weight is greatly different between both the segments, and substantial calculation of a molecular weight of the block copolymer is difficult depending on a type of the soft segment. Therefore, a proportion between the hard segment and the soft segment is expressed by mass%.

A proportion of each segment is calculated as follows. In a case where the hard segment is polybutylene terephthalate and the soft segment is polycaprolactone, the proportion of the hard segment is the total of mass% of terephthalic acid residue ($-COC_6H_4CO-$) and the mass% of 1,4-butanediol residue ($-OC_4H_8O-$), and the proportion of the soft segment is the mass% of ε-caprolactone residue ($-OC_5H_{10}CO-$).

Examples of the dicarboxylic acid component having a furan skeleton as a constituent component of the aromatic polyester structural unit of the hard segment include 2,5-furandicarboxylic acid, 2,3-furandicarboxylic acid, 2,4-furandicarboxylic acid, and 3,4-furandicarboxylic acid. These components have aromatic ring structures. Particularly, since a high melting point is obtained, 2,5-furandicarboxylic acid is preferable. Examples of the aromatic dicarboxylic acid component other than dicarboxylic acid having a furan skeleton include terephthalic acid, isophthalic acid, and sodium 5-sulfoisophthalate. However, an alicyclic dicarboxylic acid component such as 1,4-cyclohexanedicarboxylic acid can also be used to the extent that the effect of the present invention is not impaired. As a raw material monomer to be used when the thermoplastic copolyester is produced, not only the above-described dicarboxylic acid but also derivatives thereof (for example, dimethyl esters) may be used.

Specific examples of the aliphatic diol component as a constituent component of the aromatic polyester structural unit of the hard segment include ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, neopentyl glycol, and diethylene glycol. One type of the aliphatic diol may be used alone or two or more types thereof may be used. Among them, ethylene glycol and 1,4-butanediol are preferable since they have high versatility and are each linear aliphatic glycol. Particularly, the content of 1,4-butanediol is preferably large in order to allow an average chain length of the aromatic polyester structural unit as described below to have a predetermined value or more.

For example, in condensation polymerization between dicarboxylic acid having an aromatic structure as typified by furan dicarboxylic acid or a dimethyl ester thereof, and 1,4-butanediol, a 1,4-butanediol residue at the terminal and 1,4-butanediol which is unreacted tend to be cyclized into THF (tetrahydrofuran) and flow out from the system. As a result, an amount of the aliphatic diol component is reduced, and therefore, at the terminals of the generated polymer, the number of acid terminals tends to be large and the number of hydroxyl group terminals tends to be small. The presence of hydroxyl groups promotes transesterification and reduces an average chain length of the aromatic polyester structural unit in synthesis of the thermoplastic copolyester. Therefore, 1,4-butanediol is preferable as the aliphatic diol component of the aromatic polyester.

In a case where a content of the aromatic polyester component formed of the dicarboxylic acid component having a furan skeleton and the aliphatic diol component as the aromatic polyester structural unit of the hard segment component is 70 mass% or more, the enzymatic degradability is high and contribution to high heat resistance is also made. The content of the aromatic polyester component is preferably 80 mass% or more, more preferably 90 mass% or more, and even more preferably 95 mass% or more. It is also preferable that the content of the aromatic polyester component formed of the dicarboxylic acid component having a furan skeleton and the aliphatic diol component is 100 mass%.

The aliphatic hydroxycarboxylic acid component in the aliphatic polyester structural unit of the soft segment may be formed of only one component or formed of a plurality of components. As a raw material monomer used when the thermoplastic copolyester is produced, the aliphatic hydroxycarboxylic acid component may be an aliphatic hydroxycarboxylic acid compound or an aliphatic lactone compound having a ring structure. Specific examples of the aliphatic hydroxycarboxylic acid component include β-propiolactone, γ-butyrolactone, δ-valerolactone, ε-caprolactone, δ-hexanolactone, β-butyrolactone, pivalolactone, p-dioxanone, lactic acid, and glycolic acid. Among them, any one of ε-caprolactone, δ-valerolactone, γ-butyrolactone, β-propiolactone, β-butyrolactone, and pivalolactone is preferably used. ε-caprolactone is particularly preferable since a linear aliphatic polyester that can be easily identified by an enzyme is obtained and ε-caprolactone is a versatile monomer.

In the aliphatic polyester structural unit of the soft segment, for example, an aliphatic polyester component formed of aliphatic dicarboxylic acid and aliphatic diol may be copolymerized, in addition to the aliphatic hydroxycarboxylic acid component.

In a case where a content of the aliphatic hydroxycarboxylic acid component as the aliphatic polyester structural unit of the soft segment is 70 mass% or more, enzymatic degradability is high. The content of the aliphatic hydroxycarboxylic acid component is preferably 80 mass% or more, more preferably 90 mass% or more, and even more preferably 95 mass% or more. It is also preferable that the content of the aliphatic hydroxycarboxylic acid component is 100 mass%.

The thermoplastic copolyester of the present invention may contain a soft segment other than the soft segment formed of the aliphatic polyester structural unit to the extent that the effect of the present invention is not impaired (for example, preferably 20 mass% or smaller and more preferably 10 mass% or smaller). Examples of such a soft segment include an aliphatic polyether structural unit and an aliphatic polycarbonate structural unit. It is also preferable that the thermoplastic copolyester of the present invention does not contain a soft segment other than the soft segment formed of the aliphatic polyester structural unit.

The thermoplastic copolyester of the present invention has a reduced viscosity of 0.5 to 3.5 dl/g. If the reduced viscosity is smaller than 0.5 dl/g, mechanical strength is significantly reduced, and practical use of the thermoplastic copolyester becomes difficult. If the reduced viscosity is larger than 3.5 dl/g, the enzymatic degradability is reduced, and, furthermore, a polymerization time becomes long and productivity may thus be negatively affected. The reduced viscosity is preferably 0.7 to 3.0 dl/g and more preferably 1.0 to 2.5 dl/g.

In order to achieve a high melting point, the thermoplastic copolyester having both the hard segment and the soft segment is preferably a block copolymer, that is, both the chain length of the aromatic polyester structural unit of the hard segment and the chain length of the aliphatic polyester structural unit of the soft segment preferably have a predetermined value or more. Particularly, the average chain length of the hard segment formed of the crystalline aromatic polyester structural unit is preferably 3 to 15. In this case, both enzymatic degradability and heat resistance can become more excellent. The average chain length of the aromatic polyester structural unit refers to the average number of continuous butylene terephthalate units in the thermoplastic copolyester in a case where the aromatic polyester structural unit is polybutylene terephthalate. The average chain length is calculated by using nuclear magnetic resonance method (NMR method) described below in Examples, and is expressed by rounding values to the nearest whole numbers. The average chain length of the aromatic polyester structural unit is more preferably 5 or more and even more preferably 8 or more. The upper limit of the average chain length of the aromatic polyester structural unit is more preferably 12 or smaller and even more preferably 10 or smaller.

As a method for producing the thermoplastic copolyester of the present invention, a known method can be used. For example, esterification of the dicarboxylic acid component having a furan skeleton and the aliphatic diol component as described above is performed at 150°C to 250°C, and thereafter, polycondensation is performed at 200°C to 280°C while pressure is reduced, to synthesize aromatic polyester. The aromatic polyester and the lactone compound as the aliphatic hydroxycarboxylic acid component as described above are melted at 150°C to 250°C, and aliphatic polyester is formed through ring-opening polymerization of the lactone compound and simultaneously copolymerized with the aromatic polyester, and pressure is thereafter reduced to cause residual monomers to flow out from the system, and thus, the target thermoplastic copolyester can be obtained. When the aromatic polyester is synthesized, a dimethyl ester of the dicarboxylic acid component having a furan skeleton as described above may be used. The aromatic polyester can be obtained by performing transesterification between the dimethyl ester of the dicarboxylic acid component, and the aliphatic diol component at 150°C to 250°C, and performing polycondensation at 200°C to 280°C while pressure is reduced. Furthermore, in the synthesis of the thermoplastic copolyester, the aliphatic polyester constituting the soft segment is polymerized by a known method, and the aromatic polyester of the hard segment is also added thereto, and the obtained product is melted and stirred at 150°C to 250°C under reduced pressure, whereby the target thermoplastic copolyester can be obtained.

A method in which the average chain length of the aromatic polyester structural unit is obtained in a range of 3 to 15 will be described. It is important that the number of hydroxyl group terminals of the aromatic polyester when the aliphatic polyester of the soft segment and the aromatic polyester of the hard segment are copolymerized. This is because the larger the number of hydroxyl group terminals of the aromatic polyester is, the more the transesterification progresses, and the average chain length of the aromatic polyester structural unit is shortened. The hydroxyl value of the aromatic polyester is preferably 150 eq/ton or smaller and more preferably 100 eq/ton or smaller. The hydroxyl value of the aromatic polyester can be measured by NMR.

As a condition in which the aliphatic polyester of the soft segment and the aromatic polyester of the hard segment are copolymerized, an optimal condition needs to be found so as to prevent the average chain length of the aromatic polyester structural unit from being short due to excessively long time and excessively high temperature when copolymerization is progressed. Although this condition depends on a polymerization device to be used, a scale, or the like, the condition can be found by performing an experiment as a trial several times.

During synthesis of the thermoplastic copolyester, presence of a metal contained in a raw material may promote transesterification and reduce the average chain length of the aromatic polyester structural unit. Although this depends on the structure of the compound and a kind of the metal, a content of a metal in the raw material is preferably small. The thermoplastic copolyester is preferably synthesized by using a raw material in which a content of a metal is reduced by a known purification method such as filtration of a solution, reprecipitation, and recrystallization.

When the thermoplastic copolyester is produced, a known catalyst can be used. For example, an acetate or a carbonate of lead, zinc, manganese, calcium, cobalt, magnesium, sodium, etc., metal oxide of magnesium, zinc, lead, antimony, germanium, iron, etc., or an organic metal compound of tin, lead, titanium, etc., can be used alone or a plurality of them may be used in combination, according to a reaction system. However, since transesterification may be promoted and the average chain length of the aromatic polyester structural unit may be significantly reduced, an optimal catalyst type and an optimal catalyst amount are preferably set.

In the thermoplastic copolyester of the present invention, a weight reduction rate is preferably 70 weight% (wt%) or more in an enzymatic-degradation test in which a polyester-degrading enzyme is used. The enzymatic degradation test in which a polyester-degrading enzyme is used refers to an enzymatic degradation test in which dry powdery thermoplastic copolyester having been sufficiently dried and such a cutinase solution that an enzyme activity becomes 165 U are added in a phosphate buffer having a pH of 8.0 and stirred at 50°C for 24 hours, and thereafter filtered through a filtration filter having a hole diameter of 10 $\mu$m, and the weight of a solid content remaining on the filter is measured to confirm the enzymatic degradability. The enzymatic degradation test will be described in detail in Examples. In this test, the weight reduction rate is more preferably 75 weight% or more, even more preferably 80 weight% or more, particularly preferably 85 weight% or more, and most preferably 90 weight% or more.

A melting point of the thermoplastic copolyester of the present invention preferably ranges from 130°C to 167°C from the viewpoint of heat resistance. The melting point is more preferably 135°C to 166°C and even more preferably 140°C to 165°C. The melting point of the thermoplastic copolyester can be measured by a differential scanning calorimeter, and the details thereof is as described in Examples. The melting point of the thermoplastic copolyester correlates with the average chain length of the aromatic polyester structural unit. In order to set the melting point in the above-described range, it is considered to be also important to set the average chain length of the aromatic polyester structural unit in a predetermined range.

When the thermoplastic copolyester is produced, a phosphorus-based antioxidant or a thioether-based antioxidant may be used before, during, or after the reaction in order to inhibit thermal deterioration, oxidative deterioration, and the like. The antioxidant may be used alone or the antioxidants may be used in combination. An amount of the antioxidant to be added is preferably 0.1 mass% or more and 5 mass% or smaller with respect to the thermoplastic copolyester. If the amount is smaller than 0.1 mass%, the effect for thermal deterioration may be poor. If the amount is larger than 5 mass%, other physical properties and the like may be negatively affected.

Furthermore, in the present invention, a polyfunctional compound selected from the group consisting of an epoxy compound, organic carboxylic acid and/or an anhydride thereof, an oxazoline compound, and an isocyanate compound, each of which has at least two reactive groups, may be added. This is effective from not only the viewpoint of obtaining a high-molecular weight thermoplastic copolyester in a relatively short time period, but also enhancing mechanical characteristics, and obtaining thermal stability. However, a crosslinked structure may negatively affect enzymatic degradability. Therefore, an added amount of the compound having two reactive groups is preferably 5 mass% or smaller.

In order to further improve enzymatic degradability of the thermoplastic copolyester of the present invention, a bio-derived component such as starch, cellulose, sugar, and protein may be added alone or two or more of them may be added in combination. An added amount with respect to the thermoplastic copolyester is preferably 10 mass% or smaller. If the added amount is larger than 10 mass%, thermal properties and mechanical characteristics may be negatively affected.

The thermoplastic copolyester of the present invention can be used for various molded products since enzymatic degradability, heat resistance, and toughness are excellent. The thermoplastic copolyester can be used for molded products such as fibers, films, and sheets. Particularly, the thermoplastic copolyester can be expected to be applied to agricultural mulch films, garbage bags, plastic bags, compost bags, drink labels, food trays, food packaging films, straws, cutlery, medical textiles, resin modifiers, coating agents, and the like.

EXAMPLES

Examples and analysis methods will be specifically described below. However, the present invention is not limited to the examples.

The thermoplastic copolyester indicated in each of the examples was polybutylene furandicarboxylate-polycaprolactone block copolymer (PBFCL).

In the examples, the PBFCL synthesis was performed by three steps of

(i) synthesis of oligomer through transesterification between dimethyl furan-2,5-dicarboxylate (DMFD) and 1,4-butanol (1,4-BD),
(ii) synthesis of polybutylene furandicarboxylate (PBF) through oligomer polycondensation, and
(iii) ring-opening polymerization of $\varepsilon$-caprolactone ($\varepsilon$-CL) and synthesis of PBFCL through copolymerization with PBF.

(Example 1)

(i) (ii) In a 2 L reaction tank having a stirrer, a thermometer, and a distillation cooler, 51 mass% of DMFD (containing 43 ppm of Fe and 53 ppm of Na), 49 mass% of 1,4-BD, and a 1-butanol diluted solution (68.1 g/L) of tetrabutoxy titanate (TBT) as a catalyst were added such that 150 ppm of Ti atoms were contained with respect to a mass of PBF to be obtained, and transesterification was performed at 170°C to 190°C for one hour, and it was confirmed that 90 mass% or more of methanol with respect to a theoretical amount flowed out. Subsequently, while stirring was performed at 80 rpm, the temperature was increased from 190°C to 240°C over one hour, and, at the same time, pressure was slowly reduced, and polycondensation was performed at 10 Pa or smaller for 20 minutes. About 500 g of PBF having a reduced viscosity of 1.0 dl/g, a melting point of 171°C, and a hydroxyl value of 45 eq/ton was confirmed to be obtained.

(iii) In a 0.1 L reaction tank having a stirrer, a thermometer, and a distillation cooler, 57 mass% of PBF described above, and 43 mass% of ε-CL were added, and the PBF was melted at 200°C for 15 minutes (when five minutes passed, stirring was started at 20 rpm, and, when ten minutes passed, the rate was changed to be 100 rpm). Subsequently, ring-opening polymerization of ε-CL was performed for 60 minutes, and thereafter, pressure was slowly reduced over 30 minutes, and a reaction was performed at 500 Pa or smaller for 130 minutes. About 20 g of PBFCL having a reduced viscosity of 1.1 dl/g was obtained. Physical properties such as a melting point and enzymatic degradability are indicated below in Table 2.

(Example 2)

Synthesis was performed in the same method as in Example 1 except for a composition ratio. In the step (iii), the compositions in the loading were 51 mass% of PBF and 49 mass% of ε-CL. PBFCL having a reduced viscosity of 1.4 dl/g was obtained.

(Example 3)

Synthesis was performed in the same method as in Example 1 except for a composition ratio. In the step (iii), the compositions in the loading were 40 mass% of PBF and 60 mass% of ε-CL. PBFCL having a reduced viscosity of 1.5 dl/g was obtained.

(Example 4)

(i) In a 0.3 L reaction tank having a stirrer, a thermometer, and a distillation cooler, 51 mass% of DMFD (content of each of Fe and Na was 1 ppm or smaller), 49 mass% of 1,4-BD, and 1-butanol diluted solution (68.1 g/L) of TBT as a catalyst were added such that 150 ppm of Ti atoms were contained with respect to a mass of PBF to be obtained, and transesterification was performed at 150°C to 180°C for three hours while stirring was performed, to obtain about 80 g of oligomer. It was confirmed that 90 mass% or more of methanol with respect to a theoretical amount flowed out. The oligomer was left as it was at room temperature overnight after being extracted.

(ii) In a 0.1 L reaction tank having a stirrer, a thermometer, and a distillation cooler, the oligomer obtained in (i) was added and a 1-butanol diluted solution (68.1 g/L) of TBT was additionally added as a catalyst such that 150 ppm of Ti atoms were contained with respect to a mass of PBF to be obtained. After melting was performed at 180°C for ten minutes, stirring was started at 100 rpm, and the temperature was increased to 240°C over 60 minutes, and, at the same time, the pressure was slowly reduced for the first 30 minutes. Polycondensation was performed at 500 Pa or smaller for two hours, and about 30 g of PBF having a reduced viscosity of 0.5 dl/g, a melting point of 172°C, and a hydroxyl value of 53 eq/ton was obtained.

(iii) In a 0.1 L reaction tank having a stirrer, a thermometer, and a distillation cooler, 57 mass% of PBF described above, and 43 mass% of ε-CL were added, and the PBF was melted at 200°C for ten minutes (when five minutes passed, stirring was started at 20 rpm, and, when ten minutes passed, the rate was changed to be 100 rpm). Subsequently, ring-opening polymerization of ε-CL was performed for 80 minutes, and thereafter, pressure was slowly reduced over 30 minutes, and a reaction was performed at 500 Pa or smaller for 60 minutes. About 20 g of PBFCL having a reduced viscosity of 0.7 dl/g was obtained. Physical properties such as a melting point and enzymatic degradability are indicated below in Table 2.

(Example 5)

PBF and PBFCL were synthesized in almost the same manner as in Example 4. Therefore, only the differences are described.

(ii) The pressure reduction was performed for 70 minutes, and polycondensation was thereafter performed at 240°C for 60 minutes, and PBF having a reduced viscosity of 0.8 dl/g, a melting point of 170°C, and a hydroxyl value of 77 eq/ton was obtained.
(iii) The compositions in the loading were 40 mass% of PBF and 60 mass% of ε-CL. PBFCL having a reduced viscosity of 1.5 dl/g was obtained.

(Comparative Example 1)

Synthesis was performed in the same method as in Example 1 except for a composition ratio. In the step (iii), the compositions in the loading were 69 mass% of PBF and 31 mass% of ε-CL. PBFCL having a reduced viscosity of 1.4 dl/g was obtained.

(Comparative Example 2)

Synthesis was performed in the same method as in Example 1 except for a composition ratio. In the step (iii), the compositions in the loading were 62 mass% of PBF and 38 mass% of ε-CL. PBFCL having a reduced viscosity of 1.1 dl/g was obtained.

(Comparative example 3)

Polybutylene adipate terephthalate (brand name: G-1100) manufactured by Chang Chun Group was evaluated. The reduced viscosity was measured as 0.9 dl/g.

(Comparative Example 4)

PBF and PBFCL were synthesized in almost the same manner as in Example 4. Therefore, only the differences are described.
(iii) The compositions in the loading were 69 mass% of PBF and 31 mass% of ε-CL. PBFCL having a reduced viscosity of 0.6 dl/g was obtained.

(Comparative example 5)

Polybutylene terephthalate·PBT (brand name: GT-430A) manufactured by TOYOBO Co., Ltd. was used to synthesize PBTCL as a copolymer with ε-CL. GT-430A had a reduced viscosity of 1.0 dl/g and a melting point of 225°C. In a 0.1 L reaction tank having a stirrer, a thermometer, and a distillation cooler, 57 mass% of GT-430A and 43 mass% of ε-CL were added, PBT was melted at 225°C for 30 minutes (when 15 minutes passed, stirring was started at 20 rpm, and, when 30 minutes passed, the rate was changed to be 50 rpm), ring-opening polymerization of ε-CL was performed for 60 minutes, and thereafter, pressure was slowly reduced over 30 minutes, and a reaction was performed at 100 Pa or smaller for 60 minutes. About 30 g of polybutylene terephthalate - polycaprolactone block copolymer (PBTCL) having a reduced viscosity of 1.6 dl/g was obtained.

(Comparative example 6)

PBTCL was synthesized in the same manner as in Comparative example 4 except for the composition. The compositions in the loading were 40 mass% of GT-430A and 60 mass% of ε-CL. The reduced viscosity of the obtained PBTCL was 1.7 dl/g.

(Comparative example 7)

PBF and PBFCL were synthesized in almost the same manner as in Example 4. Therefore, only the differences are described.
(iii) The compositions in the loading were 61 mass% of PBF and 39 mass% of ε-CL. PBFCL having a reduced viscosity of 0.6 dl/g was obtained.

[Evaluation method]

Analysis of a metal content in a raw material, determination of a hydroxyl value of aromatic polyester, determination of a composition of the thermoplastic copolyester and a chain length, and evaluation of a reduced viscosity, a melting point, a melting heat amount, and a weight reduction rate by enzymatic degradation were performed as follows.

(Analysis of metal content in raw material DMFD)

For the metal content in DMFD, a high frequency inductively coupled plasma emission spectrometer "SPECTROBLUE" manufactured by Hitachi High-Tech Science Corporation was used. About 1 g of a sample was weighed into a platinum crucible, preliminarily carbonized to 400°C on a hot plate, and carbonized at 550°C for eight hours by using an electric furnace "Type FO610" manufactured by Yamato Scientific Co., Ltd. Thereafter, 6.0 N hydrochloric acid and hydrofluoric acid were added in a small amount, and acid decomposition was performed on a hot plate, and acid was confirmed to volatilize. The element concentration in the measurement solution obtained by adjusting the volume with use of 20 mL of 1.2 N hydrochloric acid was measured, and a content of the element in the sample was calculated.

(Hydroxyl value of aromatic polyester, composition of copolyester, and chain length of aromatic polyester structural unit)

The hydroxyl value of the aromatic polyester, the composition of the copolyester, and the chain length of the aromatic polyester structural unit were determined by measuring H-NMR with use of a 400 MHz-NMR apparatus. A mixed solution of deuterated chloroform/deuterated trifluoroacetic acid/deuterated pyridine (mass ratio of 10/88/2) was used as a solvent. The chain length of the aromatic polyester structural unit was expressed by rounding values to the nearest whole numbers.

(Reduced viscosity)

In 25 mL of a mixed solvent of phenol/tetrachloroethane (mass ratio of 6/4), 0.1 g of the sample was dissolved, and the reduced viscosity was measured at 30°C by using an Ubbelohde viscometer.

(Melting point, melting heat amount)

A differential scanning calorimeter "DSC7020" manufactured by Hitachi High-Tech Science Corporation was used. In an aluminum pan, 5.0 mg of a copolyester sample was added, and a lid was pressed to seal the pan. Thereafter, the temperature was increased from 20°C to 250°C at 20°C/minute, and the sample was held for two minutes, and the sample was completely melted. Subsequently, the sample was cooled to -50°C at 20°C/min, and held for two minutes. Thereafter, the temperature was increased again to 250°C at 20°C/min. A melting point and a melting heat amount were calculated from an endothermic peak of a thermograph curve obtained in the second temperature increase.

(Production of film for tensile properties)

A copolyester film of each of the examples and the comparative examples was formed by using a desktop heat press "SA-302"manufactured by TESTER SANGYO CO., LTD. A mold having a thickness of 0.3 mm and the sample placed in the mold were set between two TEFLON (registered trademark) sheets, held from outside of the TEFLON (registered trademark) sheets by two stainless plates, and set in the heat press machine. The sample was melted at about a temperature of each polyester melting point+30°C for two minutes (six minutes only for PBTCL), and weight equivalent to 30 MPa was thereafter applied and the sample was left as it was for one minute. Thereafter, the sample was cooled with pure water and adjusted as a film, for evaluation, having a thickness of 0.2 mm.

(Tensile properties [elastic modulus, elongation at break])

A tensile tester "TG-2kN" manufactured by MinebeaMitsumi Inc. was used. The film, for evaluation, having a thickness of 0.2 mm was cut out so as to have a size of 10 mm×50 mm, and the film was set at the tensile tester such that the direction of 50 mm length was a tensile direction and a distance between the chucks was 20 mm, and the test was thereafter performed at a tensile rate of 300 mm/minute. The test was performed three times, and the average value of each of the elastic modulus and the elongation at break was adopted.

(Measurement of activity of enzyme)

For the enzymatic degradation test, Novozym (registered trademark) 51032 (manufactured by Strem Chemicals) as a commercially available Humicola insolens-derived cutinase solution was used. p-nitrophenyl butyrate (pNPB) was used as a substrate for measuring activity of enzyme. In pNPB hydrolysis reaction, 1-butanoic acid and p-nitrophenol (pNP) are generated. Therefore, by tracing absorbance change at 400 nm corresponding to the maximum absorption wavelength of pNP, the concentration was measured.

As a buffer A for measuring the activity, 100 mM of Tris-HCl buffer (pH of 9.0) containing 150 mM of NaCl and 0.5% (v/v) Triton X-100 was used. A substrate solution B obtained by dissolving p-nitrophenyl butyrate (pNPB, manufactured by NACALAI TESQUE, INC.) in acetonitrile to form a 50 mM solution was used. An enzyme diluted solution C was obtained by diluting the above-described commercially available cutinase solution with the buffer A to a predetermined concentration.

The measurement was performed at 37°C with each of the compositions indicated in Table 1. The reaction was started by sequentially adding the reagents and performing stirring in an inverted position in a cuvette having an optical path length of 1 cm in a spectrophotometer (ultraviolet-visible spectrophotometer UV-2450, manufactured by SHIMADZU CORPORATION), and an absorbance ($A_{400}$) at 400 nm was measured for five minutes. At a point at which the gradient of the absorbance change was maximum, $\Delta A_{400}$/min was obtained for each of the test and a blank. The measurement was performed three times, and the average value was used to calculate the activity of the enzyme according to the mathematical expression 1.

[Table 1]

|  | Blank | Test |
|---|---|---|
| Buffer A | 3000 μL | 2700 μL |
| Enzyme diluted solution C | - | 300 μL |
| Substrate solution B | 30 μL | 30 μL |
| Total | 3030 μL | 3030 μL |

[Math. 1]

[Mathematical expression 1]

$$\text{Activity } (U/mL) = \frac{\Delta A_{400}/\min \ (Test) - \Delta A_{400}/\min \ (Blank)}{\varepsilon_{400} \times l} \times \frac{V_T}{V_E} \times df$$

In the mathematical expression, $\Delta A_{400}$/min: difference in absorbance per one minute, $V_T$: amount of reaction solution, $V_E$: amount of enzyme diluted solution, $\varepsilon_{400}$: millimolar extinction coefficient of pNP under the above-described measurement condition (14.8 mM$^{-1}$cm$^{-1}$, from Literature (Biochemistry 1982, vol. 21, p. 6872-6879.)), l: optical path length, and df: dilution ratio are indicated. 1 U (unit) is defined as an amount of enzyme required for hydrolyzing 1 μmol of the substrate (pNPB) for one minute.

(Enzymatic degradation test)

Into a test tube, 50 mg of a powdery polymer sample obtained by freeze-grinding was weighed, and 5 mL of 0.1 M phosphate buffer (pH of 8.0, manufactured by FUJIFILM Wako Pure Chemical Corporation) was added. A cutinase solution was added into the test tube such that an amount of enzyme was 165 U, the test tube was sealed, and the obtained product was gently stirred at 50°C for 24 hours. After a predetermined time elapsed, the reaction solution was suctioned and filtered, and thus, powdery polymer was collected. As the filtration filter, an Omnipore membrane (manufactured by Merck) having a pore diameter of 10 μm was used. The collected polymer was dried at room temperature such that the weight became a predetermined weight, and the weight after the degradation was weighed. The weight reduction rate (wt%) of the polymer was calculated as a measure of enzymatic degradability according to the following equation.

$$\text{Weight reduction rate (wt\%)} = [(W_1 - W_2)/W_1] \times 100$$

in which $W_1$: initial weight of polymer, and $W_2$: weight of polymer after enzymatic degradation test are indicated.

Table 2 indicates the evaluation result of each example.

[Table 2]

| Thermoplastic copolyester | | | Example 1 | Example 2 | Example 3 | Comparative example 1 | Comparative example 2 | Comparative example 3 | Example 4 | Example 5 | Comparative example 4 | Comparative example 5 | Comparative example 6 | Comparative example 7 |
|---|---|---|---|---|---|---|---|---|---|---|---|---|---|---|
| Polymer composition [mass%] | Hard segment | PBF | 62 | 53 | 43 | 73 | 67 | 0 | 59 | 42 | 73 | 0 | 0 | 65 |
| | | PBT | 0 | 0 | 0 | 0 | 0 | 51 | 0 | 0 | 0 | 58 | 41 | 0 |
| | Soft segment | PCL | 38 | 47 | 57 | 27 | 33 | 0 | 41 | 58 | 27 | 42 | 59 | 35 |
| | | PBA | 0 | 0 | 0 | 0 | 0 | 49 | 0 | 0 | 0 | 0 | 0 | 0 |
| Melting point [°C] | | | 149 | 137 | 130 | 148 | 148 | 126 | 160 | 143 | 166 | 200 | 197 | 163 |
| Melting heat amount [mJ/mg] | | | 24 | 19 | 16 | 25 | 25 | 20 | 27 | 16 | 34 | 29 | 24 | 30 |
| Chain length [unit] of aromatic polyester structural unit | | | 6 | 5 | 4 | 7 | 6 | 2 | 8 | 5 | 13 | 9 | 10 | 7 |
| Elastic modulus [MPa] | | | 75 | 55 | 33 | 146 | 95 | 84 | 95 | 35 | 192 | 116 | 41 | 82 |
| Elongation at break [%] | | | 1088 | 1152 | 1470 | 940 | 952 | 941 | 687 | 1315 | 542 | 1286 | 1549 | 940 |
| Enzymatic degradation-weight reduction rate [wt%] | | | 78 | 87 | 92 | 49 | 56 | 83 | 96 | 92 | 54 | 5 | 11 | 56 |

PBF: polybutylene furandicarboxylate
PBT: polybutylene terephthalate
PCL: polycaprolactone
PBA: polybutylene adipate

EP 4 458 880 A1

It is indicated that, as compared with the copolyester which was not within the scope of the present invention, the thermoplastic copolyester of the present invention had excellent enzymatic degradability since the thermoplastic copolyester of the present invention included the specific hard segment and soft segment as the constituent components and included a predetermined amount of the hard segment, and the hard segment included a predetermined amount of the aromatic polyester component formed of the dicarboxylic acid component containing a furan skeleton, and the aliphatic diol component. For example, according to Example 1 (62 mass% of the hard segment component in the copolyester) and Comparative example 7 (65 mass% of the hard segment component in the copolyester), enzymatic degradability was high in Example 1 and enzymatic degradability was largely reduced in Comparative example 7. Furthermore, comparison between Example 1 (the dicarboxylic acid component of the hard segment was furan dicarboxylic acid) and Comparative example 5 (the dicarboxylic acid component of the hard segment was terephthalic acid) in weight reduction rate by enzymatic degradation indicates that the enzymatic degradability of Example 1 was particularly high. Furthermore, the value of the enzymatic degradability of the thermoplastic copolyester of the present invention (Example 1 to Example 5) was almost equivalent to or larger than the value of Comparative example 3 (polybutylene adipate terephthalate) generally known to have excellent enzymatic degradability.

The thermoplastic copolyester of the present invention exhibited more excellent heat resistance since the average chain length of the aromatic polyester structural unit was a predetermined length or more. For example, comparison between Example 2 (the chain length of the aromatic polyester structural unit was 5) and Comparative example 3 (the chain length of the aromatic polyester structural unit was 2, polybutylene adipate terephthalate) which had the same amount of the hard segment indicates that the melting point was higher in Example 2. Even within the scope of the present invention, according to Example 4 (the chain length of the aromatic polyester structural unit was 8) and Example 1 (the chain length of the aromatic polyester structural unit was 6) which had almost the same amount of the hard segment, the melting point was higher in Example 4.

Furthermore, the thermoplastic copolyester in the scope of the present invention was slightly poor in elongation at break as compared with Comparative example 5 and Comparative example 6 (the dicarboxylic acid component of the hard segment was terephthalic acid). However, the thermoplastic copolyester in the scope of the present invention had the elongation at break which was comparable to the elongation at break of polybutylene adipate terephthalate in Comparative example 3, and the thermoplastic copolyester having excellent toughness was able to be obtained.

INDUSTRIAL APPLICABILITY

The thermoplastic copolyester of the present invention has excellent enzymatic degradability and heat resistance, and has high utility value in industry.

**Claims**

1. A thermoplastic copolyester comprising:

   a hard segment formed of an aromatic polyester structural unit; and
   a soft segment formed of an aliphatic polyester structural unit, wherein
   a content of the hard segment in the thermoplastic copolyester is 35 to 63 mass%,
   the aromatic polyester structural unit contains 70 mass% or more of an aromatic polyester component formed of a dicarboxylic acid component having a furan skeleton, and an aliphatic diol component,
   the aliphatic polyester structural unit contains 70 mass% or more of an aliphatic hydroxycarboxylic acid component, and
   the thermoplastic copolyester has a reduced viscosity ranging from 0.5 to 3.5 dl/g.

2. The thermoplastic copolyester according to claim 1, wherein an average chain length of the aromatic polyester structural unit as calculated by using a nuclear magnetic resonance method (NMR method) ranges from 3 to 15.

3. The thermoplastic copolyester according to claim 1, wherein the aliphatic diol component constituting the aromatic polyester component is 1,4-butanediol.

4. The thermoplastic copolyester according to claim 1, wherein the aliphatic hydroxycarboxylic acid component is derived from any of ε-caprolactone, δ-valerolactone, γ-butyrolactone, β-propiolactone, β-butyrolactone, and pivalolactone.

5. The thermoplastic copolyester according to claim 1, wherein, in an enzymatic degradation test in which a polyester-degrading enzyme is used, a weight reduction rate is 70 weight% or more.

6. The thermoplastic copolyester according to claim 1, wherein the thermoplastic copolyester has a melting point ranging from 130°C to 167°C.

7. A molded product comprising the thermoplastic copolyester according to any one of claims 1 to 6.

| INTERNATIONAL SEARCH REPORT | International application No. |
|---|---|
| | **PCT/JP2022/047943** |

**A. CLASSIFICATION OF SUBJECT MATTER**

*C08G 63/672*(2006.01)i; *C08L 101/16*(2006.01)i
FI: C08G63/672; C08L101/16

According to International Patent Classification (IPC) or to both national classification and IPC

**B. FIELDS SEARCHED**

Minimum documentation searched (classification system followed by classification symbols)

C08G63/672; C08L101/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2015/093525 A1 (TOYOBO CO., LTD.) 25 June 2015 (2015-06-25) | 1-7 |
| | claims, paragraphs [0001], [0010], [0027], examples | |
| Y | | 1-7 |
| X | ZHENG, M. Y. et al. Poly(butylene 2,5-furandicarboxylate-ε-caprolactone): A new bio-based elastomer with high strength and biodegradability. eXPRESS Polymer Letters. 2017, vol. 11, no. 8, pp. 611-621 | 1-5, 7 |
| | in particular, 3. Results and discussion | |
| Y | | 1-7 |
| X | MORALES-HUERTA, Juan Carlos et al. Blocky Poly(ε-caprolactone-co-butylene 2,5-furandicarboxylate) Copolyesters via Enzymatic Ring Opening Polymerization. J. Polym. Sci., Part A: Polym. Chem. 2018, vol. 56, no. 3, pp. 290-299 | 1-5, 7 |
| | in particular, RESULTS AND DISCUSSION | |
| Y | | 1-7 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 January 2023** | **07 February 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

| International application No. |
|---|
| **PCT/JP2022/047943** |

**C.    DOCUMENTS CONSIDERED TO BE RELEVANT**

| Category* | Citation of document, with indication, where appropriate, of the relevant passages | Relevant to claim No. |
|---|---|---|
| X | CN 107312167 A (TECHNICAL INST PHYSICS & CHEMISTRY CAS) 03 November 2017 (2017-11-03)<br>claims, paragraph [0029], examples | 1, 3-5, 7 |

Form PCT/ISA/210 (second sheet) (January 2015)

INTERNATIONAL SEARCH REPORT
Information on patent family members

International application No.

**PCT/JP2022/047943**

| Patent document cited in search report | | | Publication date (day/month/year) | Patent family member(s) | Publication date (day/month/year) |
|---|---|---|---|---|---|
| WO | 2015/093525 | A1 | 25 June 2015 | (Family: none) | |
| CN | 107312167 | A | 03 November 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3411289 B
- JP 5847938 B
- JP 3674934 B

**Non-patent literature cited in the description**

- *Biochemistry,* 1982, vol. 21, 6872-6879